# EUROPÄISCHE PATENTSCHRIFT

(11) **EP 0 623 692 B1**
(45) Veröffentlichungstag und Bekanntmachung des Hinweises auf die Patenterteilung: **24.02.1999**
(21) Anmeldenummer: 93118927.8
(22) Anmeldetag: 24.11.1993
(51) Int. Cl.: C23G 5/00

(54) **Abtrennen organischer Verunreinigungen, insbesondere Öle, von Gegenständen wie Abfallprodukten**
Removing organic contaminants, in particular oils, from articles, such as waste products
Séparation d'impuretés organiques, en particulier des huiles, d'objets comme des déchets

(30) Priorität: 01.12.1992 DE 4240387
(43) Veröffentlichungstag der Anmeldung: 09.11.1994
(73) Patentinhaber: Linde Aktiengesellschaft, 65189 Wiesbaden (DE)
(72) Erfinder: Rebhan, Dieter, Dipl.-Ing., D-82538 Geretsried-Gelting (DE)
(74) Vertreter: Kasseckert, Rainer

(56) Entgegenhaltungen:
- EP-A- 0 271 135
- WO-A-90/06189
- DE-A- 3 517 186
- DE-A- 3 544 240
- GB-A- 1 457 122

## Beschreibung

Die Erfindung betrifft ein Verfahren zur Abtrennung organischer Verunreinigungen, insbesondere Öle, von Gegenständen.

Bisher werden Gegenstände beispielsweise durch Reinigung in basischen oder sauren Wasserlösungen von Ölen, Fetten und dergleichen gereinigt. In der US-3,100,105 wird eine Entfettungsvorrichtung vorgestellt, bestehend aus einem Metallbehälter, der mit einem chemischen Reinigungsmittel, wie Alkalipermanganat oder Salpetersäure, gefüllt ist. Das Reinigungsmittel wird mittels zweier an den beiden gegenüberliegenden Behälterstirnseiten angebrachter Laufräder umgewälzt, deren Drehzahl zusätzlich geändert werden kann, um die Umwälzrate zu variieren und damit den Reinigungserfolg zu erhöhen. Dieses Verfahren hat den Nachteil, daß die Rotation der Laufräder mit einem hohen Energiebedarf gekoppelt ist, und daß große Mengen chemischer Reinigungsmittel anfallen, die nach dem Reinigungsprozeß entsorgt werden müssen.

Auch die Reinigung mit auf den flüssigen oder überkritischen Zustand verdichteten Gasen ist in diesem Zusammenhang bekannt. In der WO-A-90 06 189 wird die Verwendung eines auf oder über seinen kritischen Druck verdichteten Gases zur Reinigung von Werkstücken von Fetten, Ölen etc. in einem Druckbehälter vorgeschlagen, wobei schrittweise die Temperatur dieses Gases in der Nähe seiner kritischen Temperatur geändert wird. Dadurch soll das Lösungsvermögen des hochverdichteten Gases für die verschiedenen Verunreinigungen variiert werden. Nachteilig wirken sich hier die für dieses Verfahren notwendigen Temperaturregelungsvorrichtungen aus, außerdem müssen sämtliche Vorrichtungskomponenten auf Hochdruck ausgelegt werden.

Abfälle, die beispielsweise mit Öl verseucht sind, wie Filter, Dosen, Blechgehäuse etc., werden häufig allein durch Zerkleinerung vom Öl zu trennen versucht. Diese Trennung erfolgt jedoch nur schlecht, die verbleibende Ölverschmutzung ist meist noch zu hoch, um den Abfall wiederverwerten oder deponieren zu können. Eine tiefkalte Zerkleinerung führt meist zu einer Homogenisierung und Verteilung des Öls auf einer größeren Oberfläche und damit zu einer Beeinträchtigung des Abtrennvorgangs.

In der GB-A-1 457 122 wird zum Entfernen von Verunreinigungen, wie z.B. Öl, von Metallen, vorgeschlagen, das zu reinigende Metall in einer Trommel soweit zu erhitzen, daß die Verunreinigungen verdampfen. Der entstehende Dampf wird mit zugeführter Luft vermischt und verbrannt.

Die DE-A-35 44 240 beschreibt ein Verfahren zur Aufbereitung von mit Ölen verunreinigten Abfällen, bei dem die Abfälle zunächst getrocknet werden und anschließend die Fette und Öle durch überhitzten Wasserdampf von 1,2 bis 3 bar und 120 bis 300°C extrahiert werden.

Die DE-A-35 17 186 offenbart ein Verfahren zur thermischen Reinigung von ölverschmutzten Metallspänen, bei dem in einem Stromtrockner und in einem nachgeschalteten Wirbelkammertrockner die Späne mit einem Heißgas getrocknet und die Öle verdampft werden. Die brennbaren Rückstände des mit Öldämpfen beladenen Heißgases werden in einer Nachverbrennung verbrannt. Als Heißgas finden entweder die Abgase aus einem Schmelzofen oder die Abgase aus einem separaten Heißgaserzeuger Verwendung.

In der EP-A-0 271 135 wird ein Reinigungsverfahren für Metallbauteile beschrieben, bei dem die Metallbauteile in einer reduzierenden Atmosphäre auf 500 bis 800°C erhitzt werden. Dadurch wird einerseits das auf der Oberfläche der Metallbauteile befindliche Öl verdampft, andererseits werden auf der Oberfläche verbleibende Ölreste reduziert.

Aufgabe vorliegender Erfindung ist es deshalb, ein Verfahren zum Abtrennen organischer Verunreinigungen, insbesondere Öle, von Gegenständen wie z.B. Abfallprodukten zu entwickeln, das die obengenannten Nachteile beseitigen und mit einem dem erwünschten Ergebnis entsprechenden Aufwand realisierbar sein soll.

Diese Aufgabe wird erfindungsgemäß dadurch gelöst, daß die verunreinigten Gegenstände in einem Behälter mit einem Inertgas, welches nicht auf oder über seinen kritischen Druck verdichtet ist, vorzugsweise Stickstoff oder Kohlendioxid, mit einer Temperatur von 100 bis 500°C, vorzugsweise von 250 bis 350°C, beaufschlagt werden, die Verunreinigungen in dem Inertgas gelöst werden und anschließend das mit den organischen Verunreinigungen beladene Inertgas aus dem Behälter entfernt wird.

Überraschenderweise zeigt sich, daß dieses einfache und kostengünstige Verfahren ausreicht, um Gegenstände in einem Maße von den organischen Verunreinigungen, insbesondere Ölen, zu trennen, das es gestattet, diese Gegenstände, insbesondere Abfallprodukte, vorschriftsmäßig zu transportieren, eventuell zu deponieren, wiederzuverwenden oder zu recyceln.

Als Gas wird ein Gas oder eine Gasmischung verwendet, die ein hohes Lösungsvermögen für die betreffende organische Verunreinigung aufweist.

Es zeigt sich, daß Inertgase, insbesondere Stickstoff oder Kohlendioxid, zu ausreichenden Ergebnissen bei der Abtrennung von Ölverschmutzungen führen. Da diese Inertgase kostengünstig, weder umwelt- noch gesundheitsgefährdend und in großen Mengen erhältlich sind, sind sie mit Vorteil für das erfindungsgemäße Verfahren einzusetzen.

Das Gas wird mit einer Temperatur von 100 bis 500°C, vorzugsweise 250 bis 350°C, in den Behälter eingeleitet. Im allgemeinen nimmt die Löslichkeit einer organischen Substanz im Kontakt mit einem Gas mit wachsender Temperatur zu. Die angegebenen Temperaturwerte eignen sich insbesondere für die Abtrennung von Ölverschmutzungen von Abfallstoffen.

Geeignete Druckwerte liegen bei 0,5 bis 75 bar (abs). In einem großen Arbeitsbereich nimmt die erwähnte Löslichkeit mit dem Druck zu. Bei niedrigen Systemdrücken ist jedoch der Dampfdruck der organischen Substanz für die Löslichkeit stärker bestimmend als Solvatationseffekte. Deshalb nimmt bei diesen niedrigen Systemdrücken die Löslichkeit bei gegebenem Dampfdruck der organischen Substanz mit wachsendem Systemdruck zunächst ab, durchläuft ein Minimum, um dann bei Überwiegen von Solvatationseffekten steil anzusteigen.

In einer vorteilhaften Weiterentwicklung wird das mit den organischen Verunreinigungen beladene Gas mittels Kondensation der Verunreinigungen von diesen getrennt. Hierzu wird das beladene Gas durch einen Wärmetauscher geführt, in dem durch Wärmetausch mit beispielsweise Wasser oder verflüssigtem Stickstoff die Verunreinigungen auskondensiert und abgeleitet werden. Das derart gereinigte Gas kann wiederverwendet werden.

Folglich läßt sich das erfindungsgemäße Verfahren mit Vorteil in einem Gaskreislauf betreiben. Das mit den organischen Verunreinigungen beladene Gas wird von den Verunreinigungen getrennt und anschließend wieder dem Behälter mit den verunreinigten Gegenständen zugeführt.

Vor Wiederzuführung des von Verunreinigungen gereinigten Gases wird dieses vorteilhafterweise erwärmt. Diese Erwärmung geschieht beispielsweise durch Wärmeaustausch in einem Gaserhitzer. Der Gastransport in diesem Gaskreislauf erfolgt durch einen Verdichter. In einer günstigen Ausgestaltung wird diesem Gaskreislauf jeweils nach der Auskondensation der Verunreinigungen frisches Gas zugemischt und Überschußgas aus dem Kreislauf abgelassen.

Das erfindungsgemäße Verfahren läßt sich insbesondere für mit organischen Verunreinigungen verschmutzte Abfallstoffe anwenden. Dabei ist es von Vorteil, wenn diese Abfälle vor Einfüllen in den Behälter zerkleinert werden. Durch diese Zerkleinerung läßt sich eine grobe Abscheidung von Ölrestmengen erreichen. Anschließend werden die Abfälle mittels des oben beschriebenen erfindungsgemäßen Verfahrens weiterhin vom Öl getrennt. Bestehen die Abfälle aus einem Gemisch, beispielsweise aus ölverschmutztem Filterpapier, Kunststoffen und/oder Blechen, kann dieses Gemisch nach der Reinigung mittels Magnetabscheider, Siebung und anderen Trennverfahren in seine Bestandteile zerlegt werden.

Vorteilhaft ist weiterhin, wenn die Abfälle nach einer Grobreinigung nach Beaufschlagung mit einem Kältemedium im tiefkalten Zustand zerkleinert werden. Durch die tiefkalte Zerkleinerung erfolgt eine Homogenisierung und Verteilung der Ölreste auf einer größeren Oberfläche, so daß dem Gas eine größere Angriffsfläche zur Aufnahme der organischen Verunreinigungen analog zum erfindungsgemäßen Verfahren geboten werden kann.

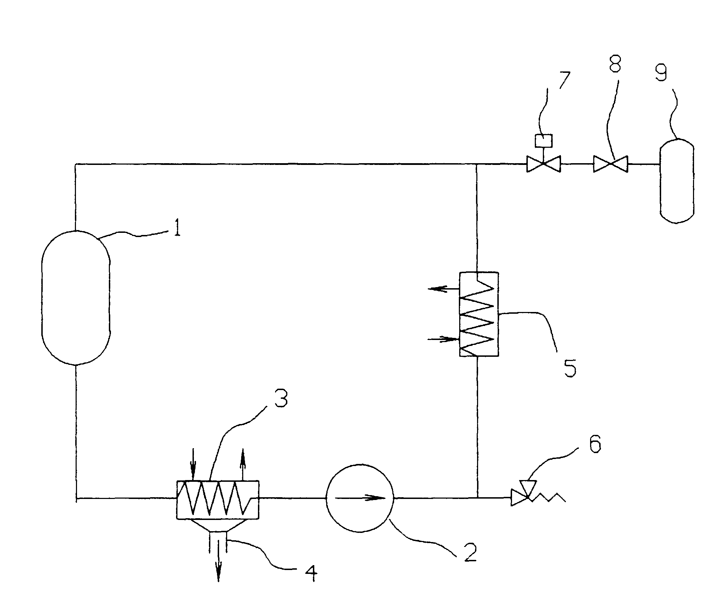

Anhand der einzigen Zeichnung soll das erfindungsgemäße Verfahren näher erläutert werden.

In der Zeichnung ist schematisch eine zur Durchführung des erfindungsgemäßen Verfahrens geeignete Anordnung in ihren wesentlichsten Bestandteilen dargestellt. Angeordnet sind in einem Gaskreislauf ein Behälter 1 zur Aufnahme von verunreinigten Gegenständen, ein Verdichter 2, der das Gas im Gaskreislauf transportiert, ein Wärmetauscher 3 mit einem Auslaß 4 für auskondensierte Verunreinigungen, ein weiterer Wärmetauscher 5 zum Erwärmen von Gas, ein Ablaßventil 6 für überschüssiges Gas sowie ein Magnetventil 7, ein Dosierventil 8 und ein Vorratsbehälter 9 für das Gas.

Mit der beschriebenen Anordnung werden ölverschmutzte Abfälle, wie Ölfilter, Kunststoffbehälter und Blechgehäuse, von den Verunreinigungen getrennt. Dazu werden diese Abfälle vorzerkleinert und von den Ölrestmengen grob separiert. Anschließend erfolgt eine tiefkalte Zerkleinerung, bei der das verbleibende Öl im Abfall homogenisiert und gleichmäßig verteilt wird. Der Behälter 1 wird mit diesen zerkleinerten Abfällen beladen und Gas wird aus dem Vorratsbehälter 9 über die Ventile 7 und 8 in den Behälter 1 geleitet. Nach einer bestimmten Verweilzeit, die von Fall zu Fall bestimmt werden muß, wird das mit dem Öl beladene Gas mittels des Verdichters 2 aus dem Behälter 1 abgesaugt und durch den Wärmetauscher 3 geleitet, in dem das Öl mittels Wärmetausch z.B. mit verflüssigtem Stickstoff oder kaltem Wasser vom Gas separiert, anschließend gesammelt und durch den Auslaß 4 abgeleitet wird. Das gereinigte Gas wird durch den Wärmetauscher 5 gepumpt, der das Gas wieder erwärmt. Vorher kann über das Ablaßventil 6 ein Teil des Gases aus dem Gaskreislauf entfernt werden und frisches Gas aus dem Vorratsbehälter 9 dem Gaskreislauf zugeführt werden. Der Behälter 1 wird von den gereinigten Abfallstoffen geleert und mit neuen verunreinigten Abfällen beladen.

Anstatt das Gas eine bestimmte Verweilzeit im Behälter 1 zu belassen, kann das Gas auch mittels des Verdichters 2 während des Reinigungsprozesses im Durchlauf gehalten werden, so lange, bis genügend viel Öl von den Abfällen abgetrennt worden ist. Die abgetrennte Ölmenge läßt sich am Ölablaß 4 messen. Die gereinigten Abfälle werden getrennt, indem man mittels eines Magnetabscheiders die Blechbestandteile von den Kunststoffen und Filterpapieren trennt und die letztgenannten beispielsweise durch Separierung in einem Wasserbad voneinander trennt.

Die gesamte Anlage wird durch Verwendung von Stickstoff oder Kohlendioxid als Reinigungsgas inertisiert, d.h. die Explosionsgefahr im Behälter 1, beispielsweise durch brennbare Abfälle, ist ausgeschlossen. Ölverschmutzte Abfälle, wie z.B. Ölfilter lassen sich mit dem erfindungsgemäßen Verfahren hervorragend recyceln.

## Patentansprüche

1. Verfahren zur Abtrennung organischer Verunreinigungen, insbesondere Öle, von Gegenständen, **dadurch gekennzeichnet**, daß die verunreinigten Gegenstände in einem Behälter (1) mit einem Inertgas, welches nicht auf oder über seinen kritischen Druck verdichtet ist, vorzugsweise Stickstoff oder Kohlendioxid, mit einer Temperatur von 100 bis 500°C, vorzugsweise von 250 bis 350°C, beaufschlagt werden, die Verunreinigungen in dem Inertgas gelöst werden und anschließend das mit den organischen Verunreinigungen beladene Inertgas aus dem Behälter (1) entfernt wird.

2. Verfahren nach Anspruch 1, dadurch gekennzeichnet, daß das Inertgas mit einem Druck von 0,5 bis 75 bar in den Behälter (1) eingeleitet wird.

3. Verfahren nach einem der Ansprüche 1 oder 2, dadurch gekennzeichnet, daß das mit den organischen Verunreinigungen beladene Inertgas mittels Kondensation der Verunreinigungen von diesen getrennt wird.

4. Verfahren nach einem der Ansprüche 1 bis 3, dadurch gekennzeichnet, daß das mit den organischen Verunreinigungen beladene Inertgas von den Verunreinigungen getrennt und anschließend zumindest zum Teil wieder dem mit verunreinigten Gegenständen beladenen Behälter (1) zugeführt wird.

5. Verfahren nach Anspruch 3 und 4, dadurch gekennzeichnet, daß das Inertgas nach Auskondensation der Verunreinigungen erwärmt wird.

6. Verfahren nach Anspruch 4, dadurch gekennzeichnet, daß dem Inertgas nach Abtrennen der Verunreinigungen frisches Inertgas zugemischt wird.

7. Verfahren nach einem der vorhergehenden Ansprüche für verunreinigte Abfälle, dadurch gekennzeichnet, daß die Abfälle vor Einfüllen in den Behälter (1) zerkleinert werden.

8. Verfahren nach Anspruch 7, dadurch gekennzeichnet, daß die Abfälle nach Beaufschlagung mit einem Kältemedium im tiefkalten Zustand zerkleinert werden.

## Revendications

1. Procédé de séparation d'impuretés organiques, en particulier des huiles, d'objets, caractérisé en ce que les objets contaminés sont mis en contact dans un réservoir (1) avec un gaz inerte, qui n'est pas condensé à ou au-dessus de sa pression critique, de préférence à l'aide d'azote ou de dioxyde de carbone, ayant une température de 100 à 500°C, de préférence de 250 à 350°C, en ce que les impuretés sont dissoutes dans le gaz inerte et en ce que le gaz inerte chargé des impuretés organiques est ensuite éliminé du réservoir (1).

2. Procédé selon la revendication 1, caractérisé en ce que le gaz inerte est introduit dans le réservoir (1) à une pression de 0,5 à 75 bar.

3. Procédé selon l'une quelconque des revendications 1 ou 2, caractérisé en ce que le gaz inerte chargé des impuretés organiques est séparé de celles-ci par condensation des impuretés.

4. Procédé selon l'une quelconque des revendications 1 à 3, caractérisé en ce que le gaz chargé des impuretés organiques est séparé des impuretés et est ensuite acheminé, au moins en partie, à nouveau au réservoir (1) chargé des objets contaminés.

5. Procédé selon la revendication 3 ou 4, caractérisé en ce que le gaz inerte est chauffé après élimination des impuretés.

6. Procédé selon la revendication 4, caractérisé en ce que l'on mélange au gaz inerte, après la séparation des impuretés, du gaz inerte frais.

7. Procédé selon l'une quelconque des revendications précédentes pour des déchets contaminés, caractérisé en ce que les déchets sont broyés avant le remplissage dans le réservoir (1).

8. Procédé selon la revendication 7, caractérisé en ce que les déchets sont broyés après mise en contact à l'aide d'un milieu réfrigérant à l'état congelé.

## Claims

1. Process for separating organic contaminants, in particular oils, from objects, characterized in that the contaminated objects are subjected in a container (1) to an inert gas, which has not been compressed to its critical pressure or above, preferably nitrogen or carbon dioxide, at a temperature of 100 to 500°C, preferably 250 to 350°C, the contaminants are dissolved in the inert gas and the inert gas loaded with the organic contaminants is subsequently removed from the container (1).

2. Process according to Claim 1, characterized in that the inert gas is introduced under a pressure of 0.5 to 75 bar into the container (1).

3. Process according to one of Claims 1 or 2, characterized in that the inert gas loaded with the organic contaminants is separated from the latter by means of condensation of the contaminants.

4. Process according to one of Claims 1 to 3, characterized in that the inert gas loaded with the organic contaminants is separated from the contaminants and is subsequently recycled at least partially to the container (1) loaded with contaminated objects.

5. Process according to Claims 3 and 4, characterized in that the inert gas is heated after the contaminants have been condensed out.

6. Process according to Claim 4, characterized in that fresh inert gas is admixed to the inert gas after the contaminants have been separated off.

7. Process according to one of the preceding claims for contaminated wastes, characterized in that the wastes are comminuted before being filled into the container (1).

8. Process according to Claim 7, characterized in that the wastes are comminuted in the deep-frozen state after having been subjected to a refrigerant medium.
